Europäisches Patentamt

European Patent Office

Office européen des brevets

(19)

(11) Publication number: **0 248 455**
**A1**

# EUROPEAN PATENT APPLICATION

(21) Application number: 87200133.4

(22) Date of filing: 29.01.87

(51) Int. Cl.⁴: **F16C 1/20** , F16C 1/10 , F16H 49/00

(30) Priority: 11.02.86 IT 2089486 U

(43) Date of publication of application: 09.12.87 Bulletin 87/50

(84) Designated Contracting States: DE ES FR GB IT

(71) Applicant: **Mauri, Stefania Via Botté, 2 I-20045 Besana Brianza (Milano)(IT)**

(72) Inventor: **Mauri, Stefania Via Botté, 2 I-20045 Besana Brianza (Milano)(IT)**

(74) Representative: **Martegani, Franco et al Ingg. GUZZI e RAVIZZA S.r.l. Via Boccaccio, 24 I-20123 Milano(IT)**

(54) Continuous device adapted to be used as two-directional mechanical power transmission.

(57) A continuous flexible device for two-directional mechanical power transmission, wherein there are comprised a plurality of interspaced elements solid with it and projecting radially from it which are adapted to be engaged by a power output unit, the said elements being guided within a sheath.

# Fig.3

EP 0 248 455 A1

# CONTINUOUS DEVICE ADAPTED TO BE USED AS TWO-DIRECTIONAL MECHANICAL POWER TRANSMISSION

The present invention relates to a continuous flexible device very simple in structure, which is particularly adapted to be used as a mechanical power transmission in both directions of movement.

The said continuous flexible device for two-directional mechanical power transmission embodied according to the invention is characterized in that it comprises a plurality of interspaced elements solid with it which project radially from it and which are adapted to be engaged by a power output unit, for example a power operated gearwheel.

The said flexible device can be of any type suited to the purpose, for example a cable, rope or band, either made of plastics material or metal.

The said elements projecting radially from the flexible device can for example be balls, cylinders, tongues or the like, and can also be constructed from plastics or metal.

The projecting elements and the flexible device can be embodied separately and then interconnected.

For instance, if the flexible device is made of metal, plastics material projecting elements can be moulded directly onto it.

However, the present invention also contemplates the flexible device mechanism and the elements projecting therefrom as embodied in a single piece of plastics material, in which the flexible device is formed from portions separating the said projecting elements and of smaller section.

The flexible device according to the invention is housed within a guide sheath, and can therefore be taken along tortuous routes of any kind.

The appended drawings show, as non-limiting examples, possible forms of practical embodiment of the invention.

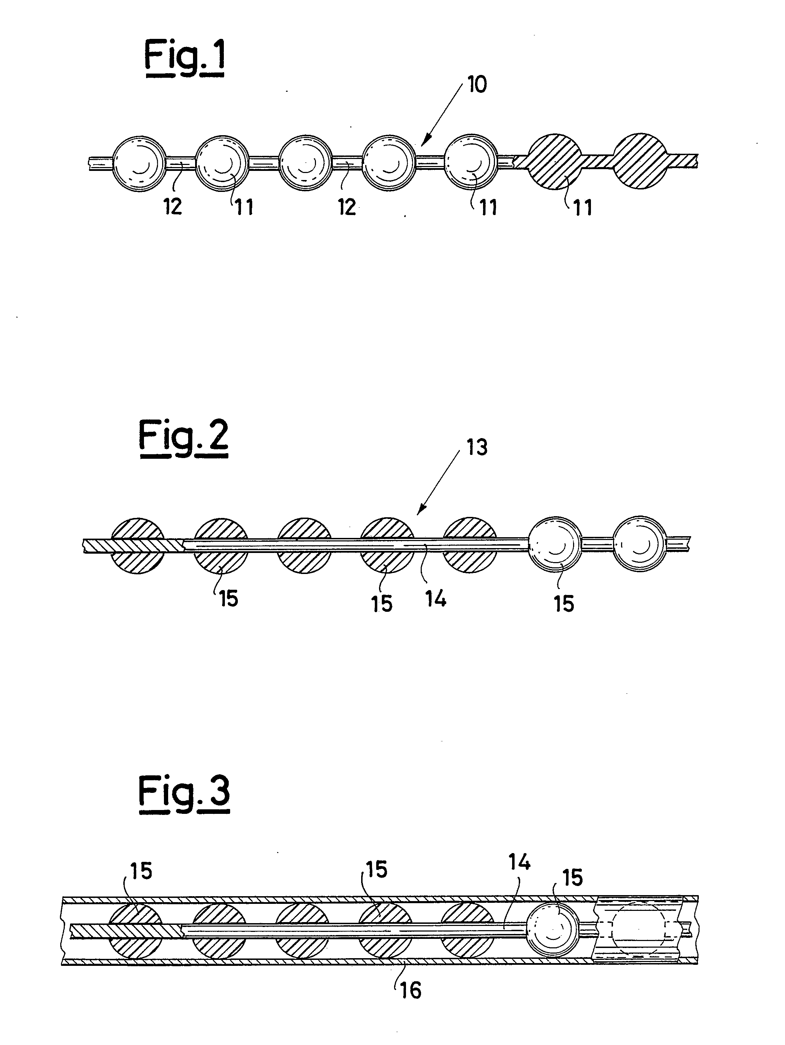

Figure 1 illustrates a continuous device 10 embodied in a single piece of suitable plastics material, in which a plurality of radially projecting elements 11, for example spherical elements, are separated by short portions 12 of narrow section able to provide the necessary degree of flexibility to the transmission.

Figure 2 shows a continuous device 13 comprising a metal cable 14 onto which there are directly moulded plastic balls 15.

Figure 3 shows the transmission of Figure 2 movable within a guide sheath 16.

The two-directional mechanism power transmission embodied according to the invention can find application in a large number of sectors of the art.

It can in general be adapted to transmit the force of any mechanism, either manual or power operated, or also natural forces, to another mechanism, both compressive and tractive.

The device of the invention can transmit a force from a fixed mechanism to another movable mechanism, or between two movable mechanism, or from a fixed mechanism to an intermediate movable mechanism and from this to another final movable mechanism.

Numerous other variants are evidently contemplated as falling within the scope of the invention.

The invention finds specific application for example in the automobile sector as window wind rope, conditioning control, external rearview mirror regulator, sunroof slide-control, retractable headlight control, electrically heated seat operated control and the like.

Applications in other fields of the art are also contemplated, for instance for imparting movement to toys, industrial robots, domestic curtains, and product dispensing machines, etc.

## Claims

1) A continuous flexible device for two-directional mechanical power transmission, wherein there are comprised a plurality of interspaced elements solid with it and projecting radially from it which are adapted to be engaged by a power output unit, the said elements being guided within a sheath.

2) A device as described in claim 1, wherein the said interspaced elements and the said flexible mechanism are embodied in a single piece of plastics material, in which the interspaced elements are separated from each other by a short portion of narrow section constituting the flexible device.

3) A device as described in claim 1, wherein the said radially projecting elements are constructed from plastics material and are moulded directly onto the said flexible device, which is made of metal.

## Fig.1

10
12  11  12  11  11

## Fig.2

13
15  15  14  15

## Fig.3

15  15  14  15

16

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE - A1 - 2 948 493 (KÜSTER & CO GMBH) | 1 | F 16 C 1/20 |
| A | * Page 10, line 1 - page 12, line 16; fig. 1,2 * | 2 | F 16 C 1/10<br>F 16 H 49/00 |
| | -- | | |
| A | DE - C - 601 800 (R. SURYN)<br>* Totality * | 1-3 | |
| | -- | | |
| A | GB - A - 383 924 (W. CH. LASSEN)<br>* Claim 1; fig. * | 1-3 | |
| | -- | | |
| A | US - A - 3 699 799 (O. PAINE et al.)<br>* Description of the drawings; fig. * | 1-3 | TECHNICAL FIELDS SEARCHED (Int. Cl.4) |
| | -- | | |
| A | DE - B - 1 052 769 (M.C. PIETERSE)<br>* Fig. 2,3 * | 1-3 | F 16 C 1/00<br>F 16 H 25/00<br>F 16 H 35/00<br>F 16 H 49/00 |
| | ---- | | |

The present search report has been drawn up for all claims

| Place of search | Date of completion of the search | Examiner |
|---|---|---|
| VIENNA | 22-09-1987 | ROUSSARIAN |